# EUROPEAN PATENT APPLICATION

(11) **EP 1 168 807 A2**
(43) Date of publication of application: **02.01.2002**
(21) Application number: 00308025.6
(22) Date of filing: 15.09.2000
(51) Int. Cl.: H04M 17/02, G07F 7/10

(54) **Public telephone with cash payment function**

(30) Priority: 16.06.2000 KR 0033325
(71) Applicant: Kwon, Hwang-Sub, Seoul (KR)
(72) Inventor: Kwon, Hwang-Sub, Seoul (KR)
(74) Representative: Tunstall, Christopher Stephen

(57) **Abstract**

A public telephone with a cash payment function is connected to a server of a banking agency through a telephone network and verifies whether a credit card inserted by a user is valid and, as a result of the verification, provides an amount of money required by the user form a currency cassette. Therefore, an inexpensive telephone network is used instead of an exclusive line, reducing operational costs.

## Description

### BACKGROUND TO THE INVENTION

Telephones may be classified as domestic telephones, business telephones and public telephones. Recently, there has been a growing tendency to add various effective and convenient functions to telephones. However, because public telephones are provided for public users by a communication service provider, they have only a communicating function.

Meanwhile, since general commercial banks provide services for customers only during a fixed period of hours (e.g. 09.30-16:30), it is difficult to satisfy customer requests for banking services in other periods of time (e.g. 24-hour service or late-night service). To solve the problem, most of the commercial banks provide cash processing systems for automatically performing cash handling operations associated with banking services, either on bank premises or elsewhere, operated 24 hours a day. However, since the cash processing system is designed primarily to give consideration to cash payment, the quantity of service is lowered than one would expect from a 24-hour banking service.

Further, cash processing systems, e.g. a cash dispenser (CD) or an automatic teller machine (ATM), are sometime provided at convenience stores which are open for 24 hours. However, since the number of suitable locations is limited, there are limitations on the provision of banking services to a user.

Moreover, cash processing systems are typically connected to a banking agency server using an exclusive line. When contacting the banking agency to determine whether a card inserted by the user is valid, the cash processing system must use the exclusive line.

Therefore, in conventional cash processing systems, there are the following problems. Firstly, since cash processing systems are limited in location, a great deal of effort and time is required to find the place one. Secondly, since the cash processing system is connected with the banking agency server through the exclusive line, which is expensive, the operator is burdened with the cost.

### SUMMARY OF THE INVENTION

It is therefore an object of the present invention to address these problems. To achieve this object, there is provided a public telephone with a cash service function comprising:
a user interface;
a card reader;
means for dispensing cash; and
control means for connecting the public telephone to a banking agency server if the user selects a cash service function using the user interface, transmitting card information read by the card reader to the server of the banking agency and controlling the means for dispensing cash in accordance with a response received from the banking agency server.

### BRIEF DESCRIPTION OF THE DRAWINGS

The present invention will now be described by way of example with reference to the accompanying drawings, in which:
Figure 1 is a perspective view of a public telephone with a cash payment function;
Figure 2 is a block diagram showing the structure of a first example of a public telephone with a cash payment function;
Figure 3 is a flow chart showing the operational state of a central processing unit of Figure 2;
Figure 4 is a flow chart showing the operational state of a control part of Figure 2;
Figure 5 is a block diagram showing the structure of a second example of a public telephone with a cash payment function; and
Figure 6 is a block diagram showing the structure of a third example of a public telephone with a cash payment function.

### DETAILED DESCRIPTION OF THE PREFERRED EMBODIMENTS

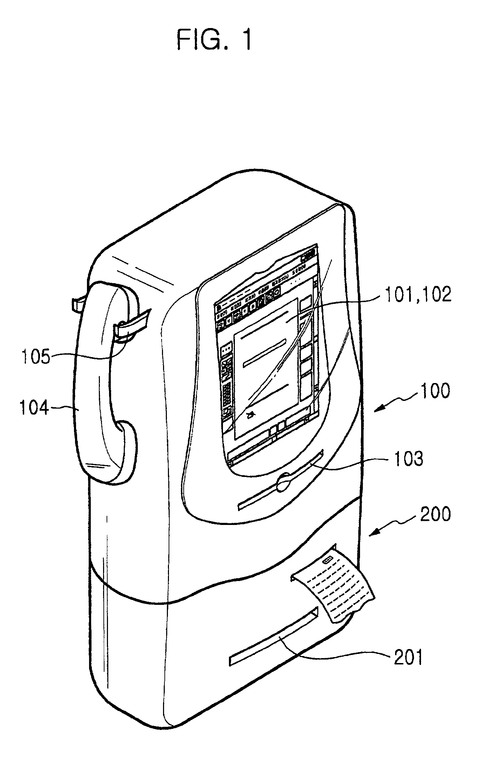

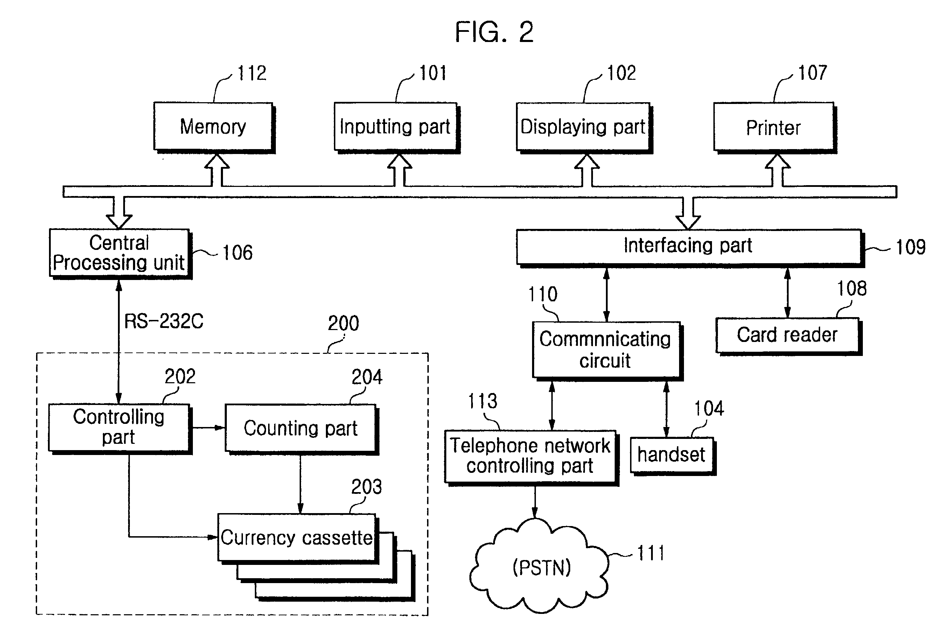

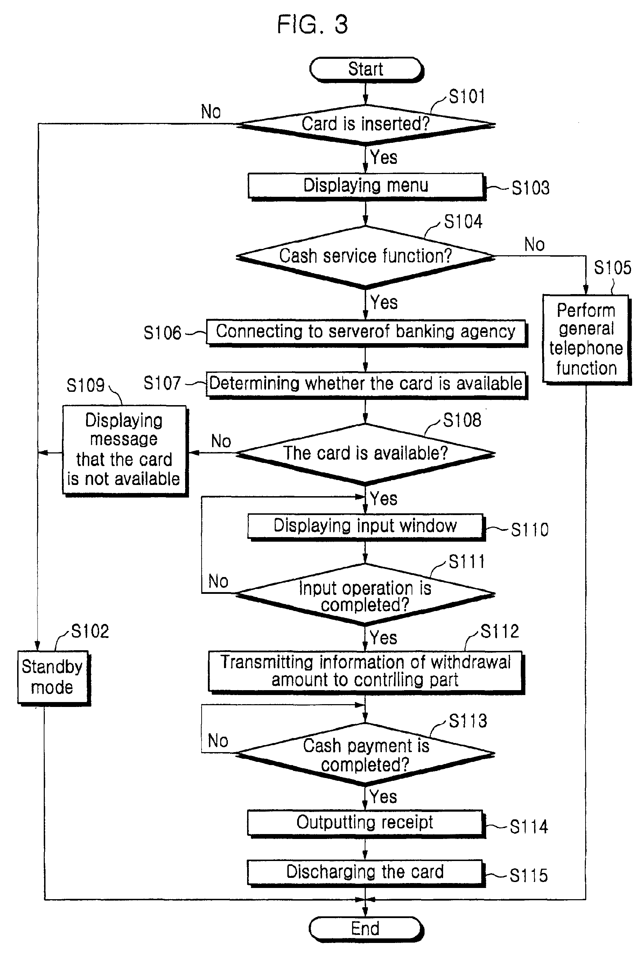

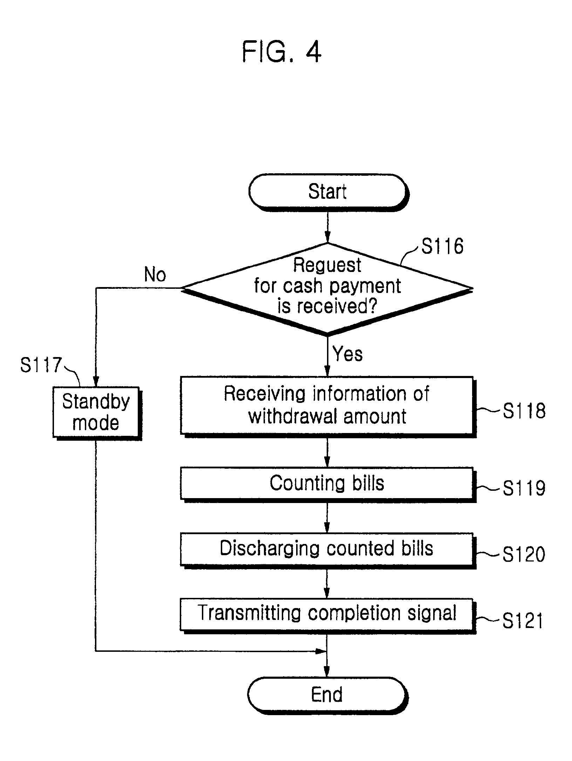

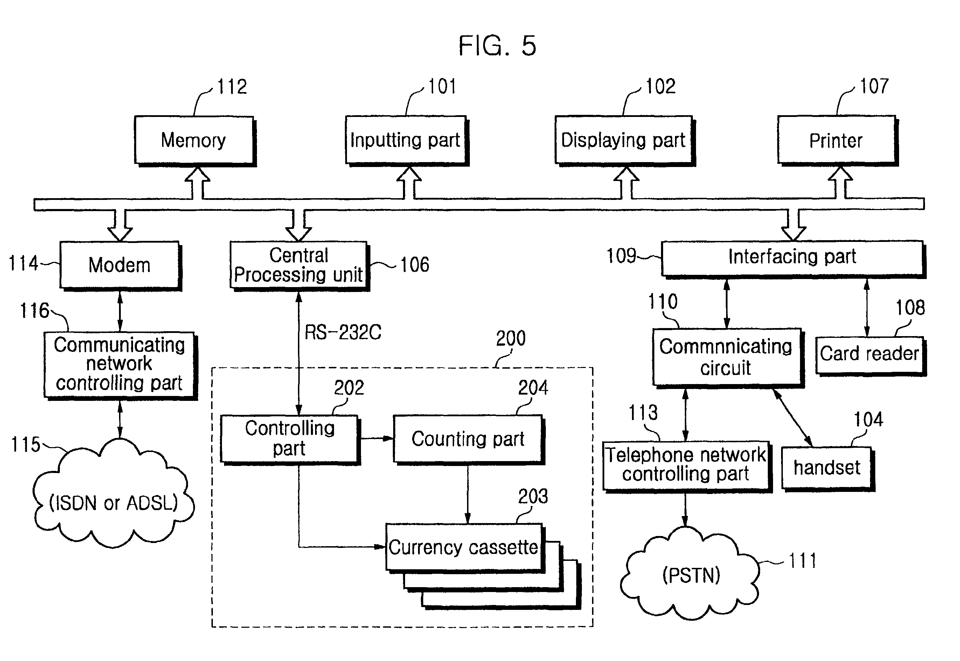

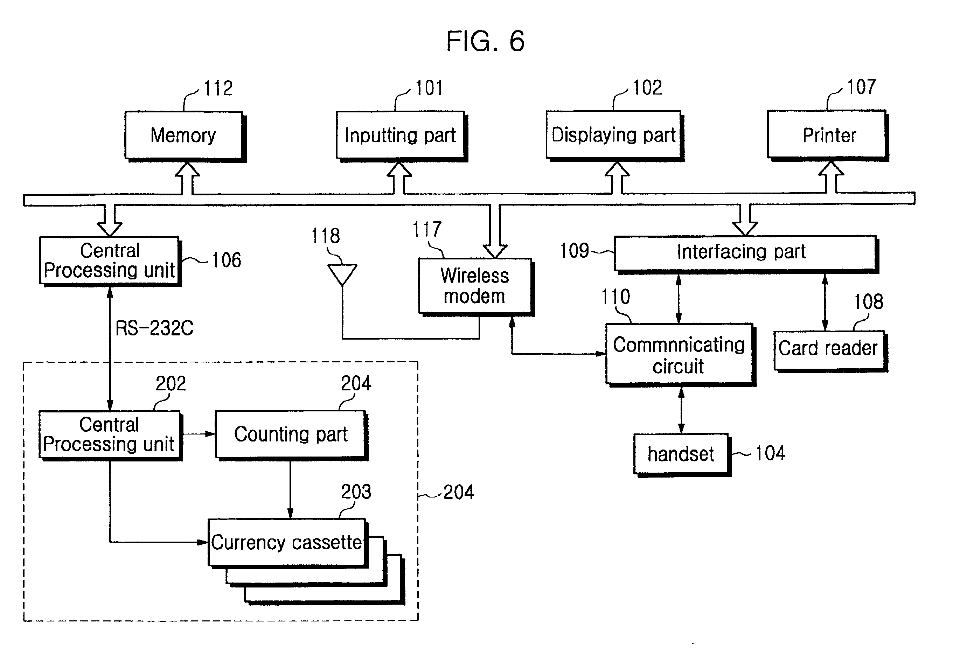

Figure 1 is a perspective of a public telephone with a cash payment function according to the present invention, Figure 2 is a block diagram showing a structure of a first embodiment of the public telephone with a cash payment function according to the present invention, Figure 3 is a flow chart showing an operational state of a central processing unit of Figure 2, Figure 4 is a flow chart showing an operational state of a control part of Figure 2, Figure 5 is a block diagram showing a structure of a second embodiment of the public telephone with a cash payment function according to the present invention; and Figure 6 is a block diagram showing a structure of a third embodiment of the public telephone with a cash payment function according to the present invention.

### FIRST EMBODIMENT

As showing in Figures 1 and 2, a public telephone 100 with a cash payment function according to the present invention comprises an inputting part 101 and a displaying part 102 which are integrally disposed at a front face of the public telephone 1000 respectively to perform an inputting function and a displaying function, a card slot 103 which is disposed at a lower portion of the inputting and displaying parts 101, 102 to insert a card (eg a phonecard, a credit card, etc) and a handset (104) which is hung on a hook at a side of the public telephone 100.

Further, a bill paying device 200 is provided at a lower portion of the card slot 103. At a desired portion of the bill paying device 200, there is formed a bill discharging port 201 for discharging the bills.

Referring to Figure 2, in the public telephone 100, there is provided a central processing unit 106 for controlling each constituting part according to a desired program. Particularly, the central processing unit 106 is connected through a public switched telephone network (PSTN) to a server of a banking agency and determines whether a card inserted by a user is available and then transmits an information of an amount of money requested by a user to a control part 202 by a series communicating way.

The inputting part 101 transmits an input information selected by the user to the central processing unit 106. Here, a key board or a touch screen may be used as the inputting part 101.

The displaying part 102 shows a present operating state of the public telephone 100 and, if necessary, may show a guiding message and an advertising message. A liquid crystal display panel is generally used as the displaying part 102. However, the displaying part 102 is not limited in the liquid crystal displaying panel, various displaying device can be used.

A printer 107 prints an information of a cash service on a receipt according to a controlling operation of the central processing unit 106 and then discharges the receipt. Preferably, a thermal printer or a dot printer is used as the printer 107, taking the dimensions of the public telephone into consideration.

A card reader 108 reads the card (a credit card or a phonecard) inserted into the public telephone to check whether the card is available, and then adjusts the amount of money charged in the card according to the use of the public telephone, and also, if necessary, transmits an information of the used amount to the server of the banking agency to allow the banking agency to demand the payment for the amount used.

An interfacing part 109 interfaces an input/output state of various data according to the operations of the card reader 108 and a communicating circuit 110, while communicating with the central processing unit 106 by a desired protocol. That is, the interfacing part 109 transmits an information of the card read by the card reader 108 to the central processing unit 106 to form a communicating line. Therefore, the amount stored in the card is adjusted by the amount used and a new amount is thus recorded in the card. Further, other operations related to the card are performed. And the interfacing part 109 controls an on/off state of a loop of a telephone network 111 through the communicating circuit 1109 and also controls a dual tone multiple frequency (DTMF) generating part to form a communicating line for generating a DTMF signal corresponding to a telephone number.

A memory 112 stores various programs for the central processing unit and various guiding messages to be displayed through the displaying part 102.

The communicating circuit 110 comprises a communicating control part for performing a communicating function of the public telephone, the DTMF generating part, a modulating/demodulating part and a line matching part.

A telephone network controlling part interfaces a communication between the public telephone 100 and the telephone network 111.

The handset 104 transmits a voice of the user through a microphone to the communicating circuit 110 and simultaneously outputs a voice signal of the other man received through the telephone network 111.

Meanwhile, in a structure of the bill paying device 200 according to the present invention, a controlling part 202 is connected through a RS-232C communicating cable with the central processing unit 106 of the public telephone 100 to mutually receive and transmit various control signals and data by the series communicating way, and controls the entire operation of the bill paying device 200.

A currency cassette 203 is divided into various sections by a monetary unit. One or more cassettes are provided to store a wad of bills according to the monetary unit.

The stored bills are transferred to a counting part 204 by controlling of the controlling part 202.

The counting part 204 counts the number of bills stored in the currency cassette 203 to be corresponded to the amount requested by the user, and then discharges the counted bills through the bill discharging port 201 to the outside.

Referring to Figures 3 and 4, the operation of the public telephone according to the present invention will be described more fully.

The central processing unit 100 determines whether the card is inserted through the card slot 103 (S101). Here, if the card is not inserted, the public telephone 100 is maintained in a standby mode by the central processing unit 106. The, if the card is inserted into the card slot 103 of the pubic telephone 100, the central processing unit 106 detects a menu information stored in the memory 112 and displays the detected menu items through the displaying part 102 (S103). Therefore, the user can select one out of the functions of the general public telephone and the cash service. The central processing unit 106 determines whether the cash service function is selected out of the various functions of the public telephone (S104).

In the step 104, if it is determined that the cash service function is not selected, the central processing unit 100 controls the public telephone to perform the general public telephone function (S105). Therefore, the public telephone is used as the general public telephone.

In the step 104, if it is determined that the cash service function is selected, the central processing unit 106 communicates with the interfacing part 109 and request to open the communicating circuit 110. The communicating circuit 110 controls the telephone network controlling part 113 and opens the PSTN (public switched telephone network) 104. Thus, the pubic telephone 100 is connected with the service of banking agency (S106).

In the next step, it is determined that the card inserted by the user is available (S107, S108). First, the card reader 108 reads an information recorded in the card. The information read by the card reader 108 is transmitted through the communicating circuit 110 to the service of banking agency. The, the central processing unit 106 waits for a result of reference from the server of banking agency.

After that, if the result of reference is received, the result is transmitted through the interfacing part 109 to the central processing unit 106. Therefore, the central processing unit 106 determines whether the cash service function should be performed. If it is determined that the card is not available according to the result of reference, the central processing unit 106 displays a message showing that the card is not available on the displaying part 102 (S109), and then switched to the standby mode (S102).

In the step 108, if it is determined that the card is available, the central processing unit 106 displays an input window for inputting a withdrawal amount by the user on the displaying part 102 (S110).

The central processing unit 106 checks whether the input operation of inputting the withdrawal amount by the user through the inputting part 101 is completed (S111). If the input operation is completed, an information of the withdrawal amount is transmitted to the controlling part 202 in the cash paying device 200 and the server of banking agency (S112) so as to perform the cash service.

Then, the central processing unit 106 checks whether a payment operation through the cash paying device 200 is completed (S113). If the payment operation is completed, the printer 107 outputs a receipt including the contents of a paying amount and a paying date, etc (S114). Then, the card inserted by the user is discharged to the outside. The central processing unit 106 is switched to an initial mode.

Here, the cash service may be performed by a way that the user draws a desired amount of money from his own account of a bank which is connected with the server of banking agency, or the user receives a loan from the bank if the balance in his account is not left or insufficient, or the user receives the case service from a banking agency with which the user has not account and then the banking agency collects the loan from the user's account in the bank or directly demand the payment of the user.

Further, if there is a limitation on a credit rating of the user and a withdrawal limit by a single try, the cash service is performed in the limitation. If the user tries to overdraw in excess of the limitation, it may be settled that the public telephone does not pay the amount input by the user or pay only an amount within the limitation.

Meanwhile, as shown in Figure 4, the controlling part 202 in the cash paying device 200 checks whether a requests for cash payment is received from the central processing unit 106 (S116). If the request for cash payment is not received form the central processing unit 106, the controlling part 202 maintains the standby mode (S117).

If the request for cash payment is received from the central processing unit 106, the controlling part 202 receives the information of the withdrawal amount from the central processing unit 106 (S118), and controls the counting part 204 to pick up and count the bills stored in the currency cassette 203 as much as the withdrawal amount input by the user (S119).

Then, the controlling part 202 discharge the bills counted by the counting part 204 through the bill discharging port 201 (S120). Preferably, the counting part 204 comprises a pick-up part (not shown) for picking up the bills from the currency cassette 203, a loading part (not shown) for discharging the counted bills through the bill discharging port 201.

If the paying operation is completed by the processes described above, the controlling part 202 transmits a completion signal to the central processing unit 106 (S121) and is then switched to the initial mode.

Here, it is obvious that the above processes should further comprise some other steps which are essential in the cash service, for example, a step of requesting to input a user's secret number and a step of transmitting the secret number to the server of banking agency to identify the card, and so forth.

### SECOND EMBODIMENT

In the first embodiment of the present invention, the general public telephone function and the cash service function are performed using the PSTN. However, in this embodiment, the connection with the server of banking agency is performed through a communicating network 115. The telephone network is spared only for the general telephone function.

Therefore, as shown in Figure 5, the structure of a system according to the second embodiment of the present invention comprises a modem 114, the communicating network (eg ISDN (integrated service digital network) or ADSL (asymmetric digital subscriber line)) 115, a communicating network controlling part 116 and all other constituting elements in Figure 2.

That is, when the public telephone 100 is connected through the communicating network 115 to the server of banking agency, the modem 114 modulates the information of the card inserted by the user into a digital signal. Further, the modem 114 also performs a demodulating function of correcting errors in the information of whether the card is available and the other information.

The communicating network controlling part 116 interfaces the modem 114 with the communicating network 115.

According to the construction as described above, the whole operating process is the same as that in the first embodiment. However, this embodiment is different from the first embodiment in that the transmitting/receiving operation of information and the connecting operation with the server of banking agency are performed through the communicating network 115. Therefore, in the embodiment, since the communication network 115 is used, the maintenance fee is increased comparing with the first embodiment. However, there is an advantage that the general telephone function and the cash service can be simultaneously performed.

### THIRD EMBODIMENT

In this embodiment, a wireless modem is used to perform the cash service and the general public telephone service. Therefore, the public telephone 100 according to the third embodiment of the present invention can provide the cash service and the general public telephone service within a transporting means such as an airplane or a ship.

That is, as shown in Figure 6, when the public telephone 100 is connected through an antenna 118 of the wireless modem 117 to the server of banking agency, the wireless modem 117 modulates the information of the card inserted by the user into a digital signal. And, the wireless modem 117 also performs a demodulating function of correcting errors in the information of whether the card is available and the other information. Further, the wireless modem 177 modulates/demodulates a voice data to perform the general telephone function.

According to the third embodiment, all of the general telephone function and the cash service function are performed through the communicating circuit 110 and the wireless modem 117. that is, the voice data and the information of the card inserted by the user, which are modulated by the wireless modem 117, transmit through the antenna 118 to a wireless station and the server of the banking agency. A voice data and a responding data from the wireless station and the server of the banking agency are received and demodulated through the antenna 118 in the wireless modem 117 and transmitted to the interfacing part 109 and the card reader 108, thereby performing the general telephone function and the cash service function.

Further, according to the third embodiment, the maintenance fee is increased comparing with the first and second embodiments. However, this embodiment is very useful in a viewpoint that the user can receive the general telephone function and the cash service function even in the ship or airplane.

As described above, according to the public telephone with a cash payment function, there are some advantages as follows:

Since the cash payment function is added to the public telephone which is mounted at so many places over a wide area, thereby providing a convenience to the user.

Further, since the public telephone with a cash payment function use the PSTN instead of the exclusive line, the maintenance cost is lowered.

And since the public telephone with a cash payment function uses the wireless modem, the user can receive the general telephone function and the cash service in a transporting means such as the ship and airplane.

## Claims

1. A public telephone with a cash service function comprising:
a user interface;
a card reader;
means for dispensing cash; and
control means for connecting the public telephone to a banking agency server if the user selects a cash service function using the user interface, transmitting card information read by the card reader to the server of the banking agency and controlling the means for dispensing cash in accordance with a response received from the banking agency server.

2. A telephone according to claim 1 further comprising a display and on which the control means is adapted to display information concerning the present operating state of the public telephone or other information.

3. A telephone according to claim 1 or claim 2 further comprising a printer on which the control means is adapted to output information concerning the result of a cash service requested by a user.

4. A telephone according to any preceding claim in which the control means is adapted to charge a card read by the card reader in accordance with the amount of use of the public telephone.

5. A telephone according to any preceding claim comprising:
a communicating circuit that allows the telephone to perform a telephone function and comprises communication control means, a DTMF generator, a modulator/demodulator and line matching means;
an interface for interfacing between the card reader and the communicating circuit;
a memory for storing various information including various programs for the public telephone; and
a telephone network control means for interfacing the communicating circuit with a telephone network.

6. A telephone according to any preceding claim in which the control means comprises a central processing unit adapted to control the operation of the public telephone and to communicate with the interface according to a specified protocol.

7. A telephone according to any preceding claim further comprising:
a modem for modulating information to be transmitted through a communications network from the public telephone and demodulating information received through the communications network; and
a communicating network control means for interfacing the modem with the communicating network.

8. A telephone according to any one of claims 1-6 further comprising:
a wireless modem for modulating information to be transmitted wirelessly through an antenna from the public telephone and demodulating information received through the antenna.

9. A telephone according to claim 7 or claim 8 in which the said information includes voice data and card data.

10. A public telephone according to any preceding claim, in which the cash dispenser comprises a sub-controller that controls cash dispensing in communication with the main controller, at least one currency cassette and means for picking and counting notes stored in the currency cassette and discharging the counted notes.
